Europäisches Patentamt

European Patent Office

Office européen des brevets

(11) Publication number: **0 495 552 A1**

## EUROPEAN PATENT APPLICATION

(21) Application number: **92200082.3**

(22) Date of filing: **14.01.92**

(51) Int. Cl.⁵: **A01B 33/08**

(30) Priority: **16.01.91 NL 9100068**

(43) Date of publication of application:
**22.07.92 Bulletin 92/30**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **Van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A soil cultivating machine.**

(57) A soil cultivating machine has soil working members (3) which are drivable about upwardly directed shafts (2). These soil working members are all assembled from a holder (4) and soil working elements (5). For driving purposes, each of these shafts is provided with a gear wheel (11), while in the region of a relevant gear wheel (11) a shaft (2) has a larger diameter than in the region where the holder (4) is mounted thereon. As a result, flexure in the shafts, due to the enormous forces to which the soil working members are exposed in practise, is significantly reduced.

FIG. 2

The present invention relates to a soil cultivating machine having soil working members which are drivable about upwardly directed shafts. Soil working members of this type usually include a holder for one or a plurality of soil working elements, such as tines or knives, which holder can be mounted by means of splines on a shaft which can be drivingly supported in the lower wall of a frame portion of the machine. The other end of the shaft is usually provided with a gear wheel fitted around the shaft with the aid of splines, via which gear wheel the soil working member is driven. As in practice the soil working members are exposed to enormous forces, this may cause the drawback of the occurrence of an unacceptable flexure.

The invention has for its object to significantly limit the flexure occurring in the shaft and to keep it whithin acceptable limits. According to the invention, the soil cultivating machine as defined in the opening paragraph is characterized in that on such a shaft there is provided a gear wheel, the shaft having in the region of the gear wheel a larger diameter than in the region where a holder for one or a plurality of soil working elements is mounted thereon. Because in the region of the gear wheel the shaft is of a thicker structure and as a consequence, of course, in case the gear wheel is mounted on the shaft with the aid of splines, the splines of the gear wheel are loaded less heavily, there is obtained a stronger construction which significantly reduces flexure in the shaft.

In a specific embodiment in accordance with the invention, the shaft of a soil working member consists of two portions, each portion having a flange and the two flanges being interconnected. Therefore, the invention also relates to a soil cultivating machine having soil working members which are drivable about upwardly directed shafts, characterized in that a shaft of a soil working member consists of two portions, each portion having a flange and the two flanges being interconnected. More particularly, a flange and an associated shaft portion may be made as an integral whole. Preferably, the flanges will be clamped against each other by means of a plurality of bolts. This construction renders it possible to clamp a gear wheel of a soil working member between two shaft portions. Therefore, the invention furthermore relates to a soil cultivating machine having soil working members which are drivable about upwardly directed shafts, characterized in that a gear wheel of a soil working member is clamped between two shaft portions. In particular, a gear wheel is clamped between flanges on relevant shaft portions, in which situation it may be advantageous for a gear wheel to be located against a fitting edge in one or both flanges. By clamping the gear wheel between the flanges there is obtained a construction in which the shaft is very rigid, and in which splines in the gear wheel and on the shaft in the region of the gear wheel may be omitted, as a result of which the gear wheel is cheaper and mounting thereof can be effected without the use of a press, while furthermore one type of gear wheel fits on shafts of different diameters.

In accordance with the invention, the construction is preferably such that the flanges are located in the gear box of the machine, while more specifically an upper shaft portion is rotatable in a bearing housing in the upper wall of the frame portion comprising the gear box of the machine and a lower shaft portion is rotatable in a bearing housing in the lower wall of the frame portion comprising the gear box of the machine.

Since in accordance with a given feature of the invention the gear wheels of at least a plurality of soil working members are mounted on the relevant shafts by means of bolts, the invention therefore furthermore relates to a soil cultivating machine having soil working members which are drivable about upwardly directed shafts, characterized in that the gear wheels of at least a plurality of soil working members are mounted on the relevant shafts by means of bolts.

In a construction in which a gear wheel is clamped between two flanges mounted on relevant shaft portions and wherein consequently splines are omitted, upper shaft portion can be made of a cheaper material. Therefore, in accordance with the invention, the shaft of a soil working member may consist of two portions made of different types of material. Therefore, invention also relates to a soil cultivating machine having soil working members which are drivable about upwardly directed shafts, characterized in that the shaft of a soil working member consists of two portions made of different types of material.

For a better understanding of the invention and to show how the same may be carried into effect, reference will now be made, by way of example, to some embodiments shown in the accompanying drawings, in which:

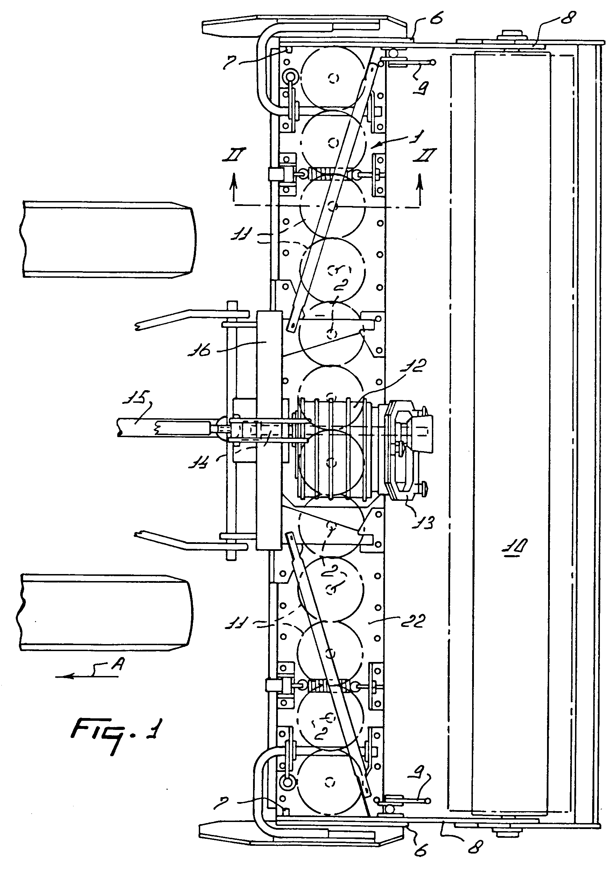

Figure 1 is a plan view of a soil cultivating machine comprising a construction in accordance with the invention;

Figure 2 is, to an enlarged scale, a cross-sectional view taken on the line II-II in Figure 1;

Figure 3 shows, to a still further enlarged scale, a detail of the cross-sectional view shown in Figure 2, and

Figure 4 is a similar cross-sectional view as shown in Figure 2 for an other embodiment of a soil cultivating machine in accordance with the invention.

The implement shown in the drawings relates to a soil cultivating machine, more particularly one for the preparation of a seed bed. The machine includes a hollow frame portion 1 which extends transversely to the direction of operative travel A. Inside the box-like frame portion 1 there are supported at equal interspaces of preferably 25 cms the upwardly directed, preferably vertical shafts 2 of soil working members 3. That end of each shaft 2 that projects from the bottom side of the frame portion 1 is provided with a holder 4, which extends at least substantially horizontally and at its ends is fitted with downwardly extending soil working elements 5 in the form of tines. The ends of the frame portion 1 are closed by means of plates 6, which extend upwardly and at least substantially parallel to a vertical plane in the direction of operative travel A of the machine. Near its leading side, each of the plates is provided with a bolt 7 which extends transversely to the direction of operative travel A, the arrangement being such that the longitudinal centre lines of the respective bolts 7 are in alignment. Around each of the bolts 7 there is arranged freely pivotably an arm 8 which extends rearwardly along the inner side of a plate 6. Each arm 8 can be adjusted to and locked in a plurality of positions by means of an adjusting device which is located near the rear side of the frame portion 1 and which, in this embodiment, is constituted by a threaded spindle 9. Between the ends of the arms 8 there is arranged freely rotatably a roller 10 in the form of a packer roller. The roller 10 includes a central cylindrical carrier, whose ends are supported freely pivotably in the arms 8 by means of shafts and bearings accommodated in bearing housings.

Inside the box-like frame portion 1, each shaft 2 of a soil working member 3 is fitted with a cylindrical gear wheel 11, i.e. one having straight teeth, the arrangement being such that the gear wheels 11 on the shafts 2 of adjacent soil working members are in driving connection with each other. Near the centre of the machine, the shaft 2 of the soil working member is extended upwardly and reaches to into a gear box 12, inside which the extended portion is in connection via a bevel gear transmission with a shaft which extends in the direction of operative travel A and which via a speed variator 13 located at the rear side of the gear box 12 is in driving connection with a superjacent shaft 14 which, seen in plan view, is located over the midway point of the box-like frame portion 1, extends in the direction of operative travel A and projects at both the leading side and the trailing side beyond the gear box 12. The shaft 14 can be coupled to the power take-off shaft of a tractor via an intermediate shaft 15. The leading side of the frame portion 1 is provided with a trestle 16 which has a three-point connection for coupling to the three-point lifting hitch of a tractor.

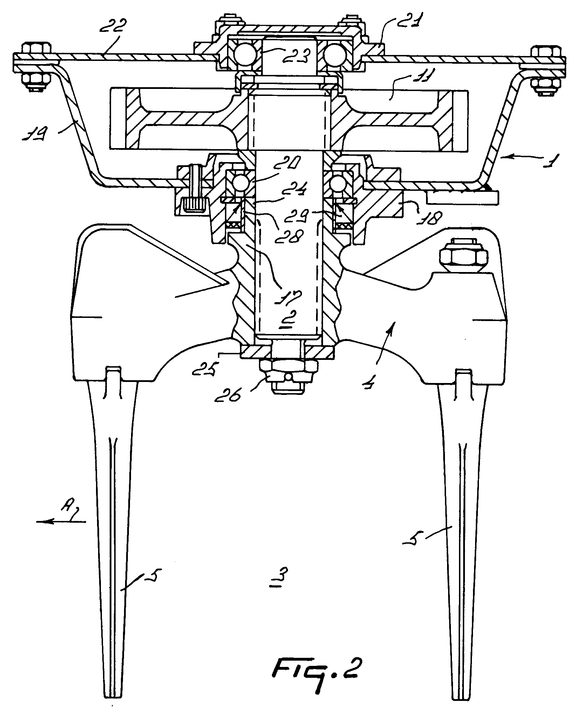

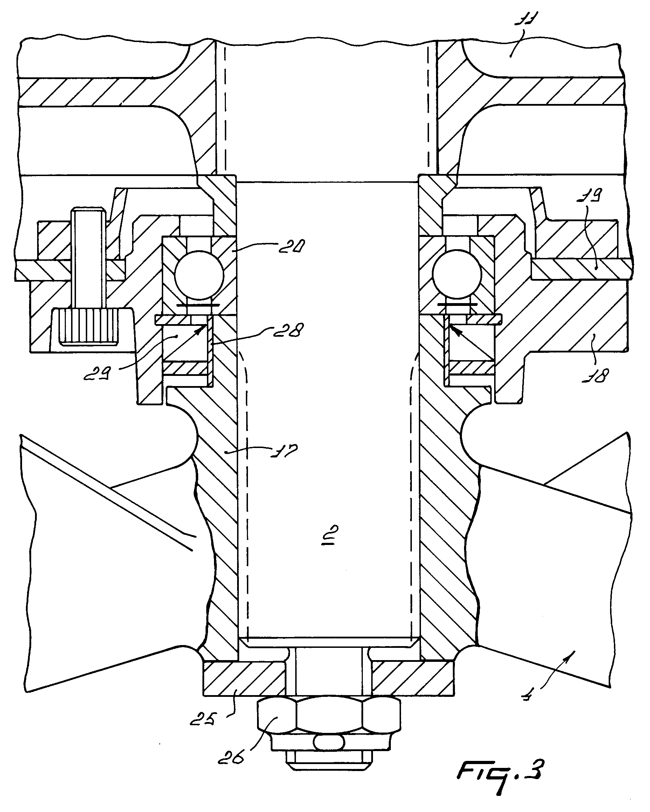

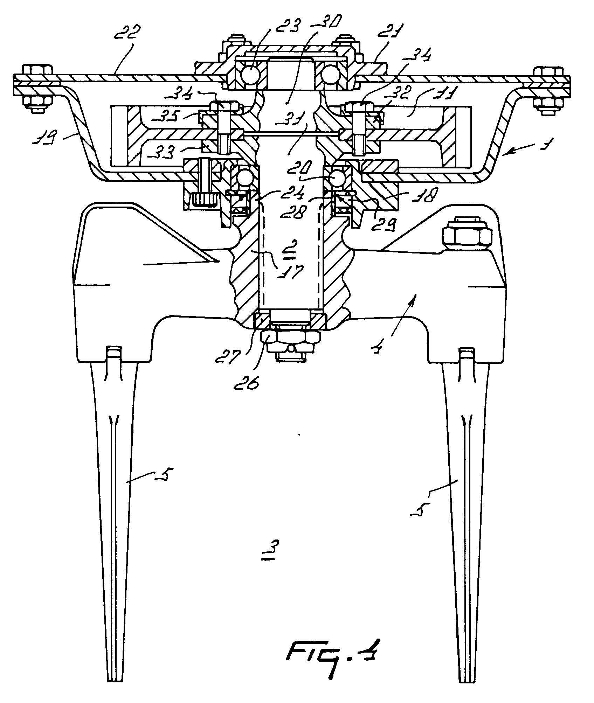

The holder 4 for the soil working elements 5 is provided with a sleeve 17, with the aid of which the holder can be accommodated around the lower end of the shaft 2. At its upper end, this sleeve 17 is cylindrical in shape without splines, i.e. it is of a smooth cylindrical design, whereas below this smooth cylindrical portion the sleeve 17 is provided with splines. In the embodiment shown in Figures 2 and 3, the shaft 2 is provided with splines at its lower end and thereabove it is provided with a cylindrical portion without splines, i.e. a smooth cylindrical portion, the arrangement being such that the smooth cylindrical portion of the sleeve is contiguous to a smooth cylindrical portion of the shaft 2 and that the splines in the sleeve 17 engage the splines on the shaft 2. The shaft 2 is supported with the aid of a ball bearing 20 in a housing 18 fastened to the lower wall 19 of the frame portion 1. The upper end of the shaft 2 is supported by means of a ball bearing 23 in a housing 21 fastened to the upper wall 22 of the frame portion 1. The sleeve 17 is extended by means of a collar-shaped portion 24 which projects into the housing 18. Thus, the sleeve 17 has a length which is at least approximately twice as large as the diameter of the sleeve. At its upper end, the sleeve 17 bears directly against the ball bearing 20 and can be clamped thereto with the aid of the annular washer 25 and the nut 26 (Figure 2). In the embodiment shown in Figure 4, the sleeve 17 is of a cylindrical design without splines both at its upper end and at its lower end; put differently, the sleeve 17 has a smooth cylindrical portion both at its upper end and at its lower end. A fitting ring 27, with the aid of which the sleeve 17 bears against the lower end of the shaft 2, can be arranged between the lowermost smooth cylindrical portion of the sleeve 17 and that end of the shaft 2 that has a smaller diameter than the superjacent portion, provided with splines, of the shaft 2. This fitting ring 27 allows some shift in the axial direction between the shaft 2 and the sleeve 17 and can be clamped with the aid of the nut 26 against a fitting edge provided in the sleeve for the purpose.

A ground bushing 28 is arranged around the collar-shaped portion 24 of the sleeve 17, while an oil seal 29 is present between this ground bushing 28 and the housing 18.

In the embodiment shown in Figure 2, the shaft 2 has in the region of the gear wheel 11 a larger diameter than in the region in which the holder 4 is accommodated about the shaft 2. The gear wheel 11 is accommodated around this widened shaft portion with the aid of splines.

In the embodiment shown in Figure 4, the shaft 2 of a soil working member consists of two portions 30 and 31. These two shaft portions are provided with flanges 32 and 33, which are interconnected by bolts 34. Each of the flanges 32, 33 and an associated shaft portion 30 and 31, respectively, are preferably made as an integral whole. The gear wheel 11 is clamped between the two shaft portions 30, 31 and, more specifically, between the two flanges 32, 33. To that end, the gear wheel 11 is located against a fitting edge in the two flanges 32, 33 and is fastened by means of bolts 34, each of which bolts 34 is screwed into a lower flange 33 via a locking ring 35, an aperture in the upper flange 32 and the gear wheel 11. Thus, the two flanges 32, 33 form a widened shaft portion located within the gear wheel box of the machine, i.e. that also here the shaft 2 has in the region of the gear wheel 11 a larger diameter than in the region in which the holder 4 is accommodated on the shaft 2.

The upper shaft portion 30 is supported in the housing 21, whereas the lower shaft portion 31 is supported in the housing 18. The two shaft portions 30, 31 are made of different kinds of material; since no splines need be provided on the upper shaft portion 30 and in further respects this shaft portion is also loaded to a lesser extent than the lower shaft portion 31, it may be made of a cheaper material.

The invention is not limited to the features described in the foregoing, but also relates to all the details shown in the drawings, whether they have been described or not.

**Claims**

1. A soil cultivating machine having soil working members (3) which are dravable about upwardly directed shafts (2), characterized in that on such a shaft (2) there is provided a gear wheel (11), the shaft (2) having in the region of the gear wheel (11) a larger diameter than in the region where a holder (4) for one or a plurality of soil working elements (5) is mounted thereon.

2. A soil cultivating machine as claimed in claim 1, characterized in that a shaft (2) of a soil working member (3) consists of two portions (30, 31), which portion (30, 31) having a flange (32 and 33, respectively) and the two flanges (32, 33) being interconnected.

3. A soil cultivating machine having soil working members (3) which are drivable about upwardly directed shafts (2), characterized in that a shaft (2) of a soil working member (3) consists of two portions (30, 31), each portion (30, 31) having a flange (32 and 33, respectively) and the two flanges (32, 33) being interconnected.

4. A soil cultivating machine as claimed in claim 2 or 3, characterized in that a flange (32, 33) and an associated shaft portion (30 and 31, respectively) are made as an integral whole.

5. A soil cultivating machine as claimed in claim 2, 3 or 4, characterized in that the flanges (32, 33) are clamped against each other by means of a plurality of bolts (34).

6. A soil cultivating machine as claimed in any one of the preceding claims, characterized in that a gear wheel (11) of a soil sorking member (3) is clamped between two shaft portions (30, 31).

7. A soil cultivating machine having soil working members (3) which are drivable about upwardly directed shafts (2), characterized in that a gear wheel (11) of a soil working member (3) is clamped between two shaft portions (30, 31).

8. A soil cultivating machine as claimed in any one of the preceding claims, characterized in that a gear wheel (11) is clamped between flanges (32, 33) on relevant shaft portions (30 and 31, respectively).

9. A soil cultivating machine as claimed in claim 8, characterized in that a gear wheel (11) is located against a fitting edge in one or both flanges (32, 33).

10. A soil cultivating machine as claimed in claim 8 or 9, characterized in that the flanges (32, 339 are located in the gear box of the machine.

11. A soil cultivating machine as claimed in any one of the preceding claims, chracterized in that an upper shaft portion (30) is rotatable in a bearing housing (21) in the upeer wall (22) of the frame portion (1) comprising the gear box of the machine.

12. A soil cultivating machine as claimed in any one of the preceding claims, characterized in that a lower shaft portion (31) is rotatable in a bearing housing in the lower wall (19) of the frame portion (1) comprising the gear box of the machine.

13. A soil cultivating machine as claimed in any one of the preceding claims, characterized in that the gear wheels (11) of at least a plurality of soil working members (3) are mounted on the relevant shafts (2) by means of bolts (34).

14. A soil cultivating machine having soil working members (3) which are drivable about upwardly directed shafts (2), characterized in that the gear wheels (11) of at least a plurality of soil working members (3) are mounted on the relevant shafts (2) by means of bolts (34).

15. A soil cultivating machine as claimed in any one of the preceding claims, characterized in that the shaft (2) of a soil working member (3) consists of two portions (30, 31) made of different types of material.

16. A soil cultivating machine having soil working members (3) which are drivable about upwardly directed shafts (2), characterized in that the shaft (2) of as soil working member (3) consists of two portions (30, 31) made of different types of material.

Fig. 1

Fig.2

FIG.3

FIG.1

European Patent Office

# EUROPEAN SEARCH REPORT

Application Number

EP    92 20 0082

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 269 183 (C. V.D. LELY) <br> * column 2, line 14 - column 4, line 38; figure 3 * <br> --- | 1,14 | A01B33/08 |
| Y | GB-A-2 136 261 (TEXAS INDUSTRIES INC.) <br><br> * page 2 - page 3; figure 2 * <br> --- | 3-10, 12-14 | |
| Y | GB-A-2 035 026 (KUHN S.A.) <br><br> * page 2, line 6 - page 3, line 32; figure 2 * <br> --- | 3-10, 12-14 | |
| A | NL-A-8 701 604 (C.V.D.LELY) <br><br> ----- | | |

TECHNICAL FIELDS
SEARCHED (Int. Cl.5)

A01B

The present search report has been drawn up for all claims

| Place of search | Date of completion of the search | Examiner |
|---|---|---|
| THE HAGUE | 06 MAY 1992 | WOHLRAPP R.G. |

EPO FORM 1503 03.82 (P0401)